(19) Europäisches Patentamt / European Patent Office / Office européen des brevets

(11) **EP 3 752 729 B1**

(12) **FASCICULE DE BREVET EUROPEEN**

(45) Date de publication et mention
de la délivrance du brevet:
**28.06.2023 Bulletin 2023/26**

(21) Numéro de dépôt: **19712622.0**

(22) Date de dépôt: **15.02.2019**

(51) Classification Internationale des Brevets (IPC):
*F02K 1/38* (2006.01)   *F02C 7/045* (2006.01)
*B64C 21/10* (2006.01)   *B64C 21/02* (2006.01)
*B64C 3/16* (2006.01)   *B64C 7/02* (2006.01)
*B64C 11/18* (2006.01)   *B64C 5/00* (2006.01)
*B64C 3/14* (2006.01)   *F15D 1/00* (2006.01)

(52) Classification Coopérative des Brevets (CPC):
**F02K 1/386; B64C 3/10; B64C 5/00; B64C 11/18;
B64C 21/02; B64C 21/10; B64C 23/00;
B64D 33/02; B64D 33/04; B64D 33/06;
F02C 7/045; F15D 1/0035; F15D 1/004;**
B64C 2003/146; B64C 2003/147;   (Cont.)

(86) Numéro de dépôt international:
**PCT/FR2019/050350**

(87) Numéro de publication internationale:
**WO 2019/158876 (22.08.2019 Gazette 2019/34)**

(54) **STRUCTURE PROFILÉE D'ÉCOULEMENT D'AIR ET TURBOMACHINE POUR AÉRONEF**

PROFILIERTE STRUKTUR FÜR LUFTSTRÖMUNG UND TURBOMASCHINE FÜR FLUGZEUG

PROFILED STRUCTURE FOR AIR FLOW AND TURBOMACHINE FOR AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2018 FR 1851360**

(43) Date de publication de la demande:
**23.12.2020 Bulletin 2020/52**

(73) Titulaire: **SAFRAN AIRCRAFT ENGINES
75015 Paris (FR)**

(72) Inventeurs:
• **GEA AGUILERA, Fernando
77550 Moissy-Cramayel (FR)**
• **GRUBER, Mathieu, Simon, Paul
77550 Moissy-Cramayel (FR)**
• **RIOU, Georges, Jean, Xavier
77550 Moissy-Cramayel (FR)**

(74) Mandataire: **Ernest Gutmann - Yves Plasseraud
S.A.S.
c/o Plasseraud IP
66, rue de la Chaussée d'Antin
75440 Paris Cedex 09 (FR)**

(56) Documents cités:
WO-A1-2013/092368   WO-A1-2013/130163
WO-A1-2015/193654   WO-A1-2016/184619
US-A- 1 862 827   US-A1- 2017 145 990
US-A1- 2017 226 865

(52) Classification Coopérative des Brevets (CPC):
(Cont.)
B64C 2003/148; B64D 2033/0206; F05D 2250/183;
F05D 2250/184; F05D 2300/514; F05D 2300/612;
Y02T 50/10; Y02T 50/60

**Description**

INTRODUCTION

DOMAINE TECHNIQUE

La présente invention concerne le domaine de la gestion aéro-acoustique de structures profilées d'écoulement d'air, telles par exemple que des aubes fixes dans une turbomachine pour aéronef ou dans un banc d'essai de telles turbomachines, ou un bec d'entrée d'air primaire de turbomachine. Plus précisément, l'invention a trait à une structure profilée d'écoulement d'air, ainsi qu'à une turbomachine pour aéronef.

ÉTAT DE LA TECHNIQUE ANTÉRIEURE

Ce type d'aube fixe se retrouve par exemple sur des aubes directrices de sortie OGV (outlet guide vane), ou redresseurs, disposés en aval d'un corps tournant pour redresser le flux d'air.

Un exemple sera donné pour une turbomachine double flux avec une soufflante (avant) et un redresseur disposé en veine secondaire.

Notamment dans les turboréacteurs Ultra-High Bypass Ratio (UHBR ; configuration de moteur à soufflante carénée à très haut taux de dilution, au-delà de 15), il est envisagé d'augmenter le diamètre de la soufflante et de réduire la longueur de la nacelle de suspension à l'aéronef, diminuant ainsi la distance entre la soufflante et les aubes directrices d'entrée IGV (Inlet Guide Vanes), les OGV et le bec d'entrée d'air primaire. Dans ce type de moteur, l'interaction du sillage de la soufflante avec les IGV, les OGV et le bec est une des sources de bruit à large bande dominante.

Au-delà de ce constat dans une turbomachine, d'autres zones de turbomachines, mais aussi de structures profilées d'écoulement d'air (ailes, aubes d'open-rotor - rotor ouvert -... etc.) sont confrontées à des problématiques de gestion aéro-acoustique.

Aussi a-t-il déjà été proposé, notamment dans WO 2016/184619, d'utiliser des structures profilées d'écoulement d'air :

- comprenant un corps et des régions poreuses acoustiquement absorbantes,
- présentant un amont, un aval, un bord d'attaque à l'amont et/ou un bord de fuite profilé à l'aval, et
- ayant, suivant une ligne de bord d'attaque et/ou une ligne de bord de fuite, un profil en serrations pourvu donc d'une succession de dents et de creux.

Ainsi, ce profil en serrations s'étend le long du bord d'attaque et/ou de fuite, autrement dit dans la direction de l'allongement de la structure au bord d'attaque et/ou de fuite.

Notamment sur les profils à corde réduite, mais aussi sur les profils fermés - (ligne de) bord d'attaque et/ou de fuite allongé suivant une ligne ou direction d'allongement fermée sur elle-même, périmétrique, comme sur un bec d'entrée d'air primaire de turbomachine -, le bruit est principalement produit au niveau du bord d'attaque et/ou de fuite, plus précisément aux creux des serrations où les fluctuations de pression sont plus intenses.

Au sujet du terme « corde » utilisé dans le présent texte, il est à noter que s'il n'y a pas strictement de « corde » comme dans le cas d'un bec (repéré 16 ci-après) de séparation entre les flux primaire et secondaire, on considérera que l'expression « dans la direction de la corde (repérée 40 ci-après) du profil » correspond alors à la direction de ce qui est dénommé ci-après « axe général (X) » ou « axe X », à savoir l'axe suivant lequel s'écoule globalement le flux fluide sur la structure profilée concernée, cet axe étant typiquement :

- l'axe longitudinal de la turbomachine (axe de révolution) et/ou de l'aéronef en cause,
- et/ou transversal, voire perpendiculaire, à l'allongement de la structure profilée, qui s'étend suivant ladite « direction d'allongement ».

On aura compris que l'expression « transversal(e) » n'implique pas une stricte perpendicularité.

L'invention vise à atténuer les fluctuations de pression intenses localement, susmentionnées, en utilisant une surface poreuse (ou un traitement acoustique) au niveau des creux des serrations.

EXPOSÉ DE L'INVENTION

L'invention est exposée dans le jeu de revendications joint.

Il est ainsi proposé que la structure profilée précitée soit telle que lesdites régions poreuses acoustiquement absorbantes forment, de façon localisée, des fonds pour les creux et définissent ainsi, avec le corps, la ligne du profil en serrations au bord d'attaque et/ou au bord de fuite de la structure profilée.

Pour maximiser la réduction de bruit, il pourra être utile que le centre géométrique de la région avec traitement acoustique ou surface poreuse soit placé à distance en aval du bord d'attaque et/ou de fuite du profil considéré, en fonction (c'est-à-dire le plus près possible) de la position où les fluctuations de pression sont maximales.

Aussi est-il alors conseillé :

- que, dans la direction de la corde, le profil en serrations présente une amplitude maximale, h, et
- que ledit centre géométrique de la région poreuse acoustiquement absorbante soit situé à une distance d en aval du bord d'attaque et/ou de fuite profilé, à l'endroit du fond des creux telle que :

$$d = h/10,$$

à 30% près.

Un avantage est la prise en compte de l'épaisseur de la structure profilée, telle une aube, qui fait se déplacer vers l'aval du creux la région où les fluctuations de pression sur la surface de cette structure profilée sont maximales.

Dans le présent texte, toutes les dimensions (d, h,...etc) sont à considérer à la même échelle : en mètre.

Pour des considérations similaires, et/ou afin d'optimiser la surface à traiter pour réduire le rayonnement acoustique, il est par ailleurs proposé :

- que, dans la direction de la ligne de bord d'attaque et/ou de fuite, le profil en serrations présente une distance entre deux sommets consécutifs de dents (ci-après $\lambda$, $\lambda 1$, $\lambda 2$), et
- que la région poreuse acoustiquement absorbante présente :

    -- dans la direction de la ligne de bord d'attaque et/ou de fuite, deux limites séparées par une distance a telle que a soit égale à un tiers de ladite distance entre deux sommets consécutifs de dents, à 30% près,
    -- dans la direction de la corde, deux limites séparées par une distance b telle que b = h/3, à 30% près.

Un avantage est que le traitement acoustique ou la surface poreuse sera placé(e) à l'endroit où les fluctuations de pressions sur la surface de l'aube sont maximales, ce qui optimise la surface à traiter pour réduire le rayonnement acoustique.

En termes de solutions matériaux à utiliser, il est proposé :

- que la région poreuse acoustiquement absorbante considérée comprenne une mousse poreuse ayant des pores de section inférieure à ladite distance a/4 ou b/4, en surface (c'est-à-dire à la surface) dudit bord d'attaque et/ou de fuite profilé de la structure profilée, et/ou,
- que ladite région comprenne, en surface dudit bord d'attaque et/ou de fuite profilé de la structure profilée, une tôle micro-perforée ou des cavités résonantes recouvrant une mousse poreuse ayant des pores de section inférieure à ladite distance a/4 ou b/4.

L'avantage est de réduire les fluctuations de pression et donc les niveaux du bruit, sachant que la taille des cavités aura une influence sur la plage de fréquences à atténuer.

Il pourra par ailleurs être préféré que ladite région poreuse acoustiquement absorbante comprenne un résonateur de Helmholtz.

En fait, le fonctionnement des résonateurs de Helmholtz, dans lequel la profondeur des cavités est étroitement liée à la fréquence cible à atténuer, peut se retrouver sur d'autres parties d'un turboréacteur, tels que sur des traitements acoustiques de nacelle.

Comme déjà noté c'est en particulier en liaison avec les aéronefs que l'invention trouve son application.

Aussi est-il précisé que la structure profilée sera avantageusement l'une parmi :

- une structure d'aéronef et de turbomachine à soufflante amont (c'est-à-dire une soufflante située en partie amont de la turbomachine), ou,
- une aile d'aéronef, un bec ou un volet d'aile d'aéronef, un pylône de support d'un moteur d'aéronef, une dérive, un stabilisateur d'aéronef, une pale d'hélicoptère, une hélice, ou encore
- des parties suivantes de turbomachine adaptée à propulser un aéronef :

    -- un bord d'attaque et/ou de fuite d'une paroi annulaire de séparation d'un flux d'air, en aval d'une soufflante de la turbomachine, entre un flux primaire et un flux secondaire,
    -- des premières aubes fixes de guidage du flux primaire (Fp),
    -- des secondes aubes fixes de guidage du flux secondaire (Fs).

En effet, dans les cas ci-avant, la présence d'un profil en serrations comme proposé permet de traiter un problème délicat liant des problématiques de gestion aéro-acoustique tant statiques (présence de structures d'entrée d'air, d'aubes...) que dynamiques (rotation d'aubes, prise en compte de certaines configurations de vols...) et ce d'autant plus s'il s'agit d'une turbomachine à soufflante amont sur laquelle les problèmes d'interférences acoustiques/aérodynamiques sont très complexes, et le bruit généré particulièrement important.

A ce sujet, il a été constaté que la région poreuse acoustiquement absorbante devra avoir pour cible l'endroit où le bruit d'interaction avec la turbulence du sillage est généré. Ainsi, on va pouvoir, via les solutions ici proposées :

- optimiser les surfaces à traiter, en les limitant dans leur étendue, permettant ainsi de limiter les pertes aérodynamiques induites par la présence de ces régions poreuses acoustiquement absorbantes qui perturbent les écoulements fluides,
- réduire les masses en jeu, par exemple grâce aux cavités de la surface poreuse ou à la densité faible des traitements acoustiques,
- limiter les coûts de fabrication par rapport à des structures à traitement acoustique présent sur des surfaces très étendues.

En termes de formes, il est proposé que les dents et creux du profil en serrations présentent individuellement une forme ondulée, avec des sommets arrondis ou plus pointus.

Il s'est en effet avéré que ces formes s'avéraient efficaces.

Des sommets arrondis permettent de réduire des concentrations de contraintes mécaniques trop fortes localement, ce qui augmente la durée de vie de la pièce en service.

Des sommets pointus permettent une réduction de bruit augmentée.

Par ailleurs, prévoir des dents et creux présentant individuellement une forme à parois latérales localement rectilignes permet d'introduire une certaine décorrélation entre les sources de bruit le long du bord d'attaque et/ou de fuite.

Le flux d'air généré, axialement (axe X ci-après, aussi dénommé axe général) en aval d'une structure tournante, comme en aval d'une soufflante de turbomachine vers un bec de veine d'air primaire, ou qui peut être influencé par une structure perturbante, comme par exemple un fuselage d'aéronef vis-à-vis d'une aile, ou une dérive vis-à-vis d'un stabilisateur, est tourbillonnant et est fortement influencé par un sens de rotation de l'air ou par celui de la soufflante, d'autant que les passages répétés des aubes de la soufflante dans l'écoulement d'air ou certaines conditions de contact avec la « structure perturbante » créent des ondes de chocs. Pour les aubes de la soufflante, ceci conduit à l'apparition de raies aux harmoniques de la fréquence de rotation de l'arbre moteur.

Pour tenir compte de ces phénomènes et afin que les surfaces des dents puissent être aussi pleinement actives que possible dans l'effet acoustique attendu, il est proposé que les dents se développent individuellement de façon inclinée par rapport à une parallèle audit axe général (X).

Dans le cas d'une rotation de soufflante, les dents seront inclinées de sorte à être orientées vers la direction de rotation - globalement oblique par rapport audit axe X - de l'écoulement tournant généré donc par la soufflante.

Autrement dit :

- la soufflante (amont) étant adaptée à tourner dans un sens prédéterminé autour de l'axe général précité (X), de sorte que le flux d'air en aval de la soufflante soit globalement orienté obliquement par rapport à cet axe (X),
- les dents pourront alors être, circonférentiellement autour dudit axe général (X), inclinées (latéralement) vers l'orientation globalement oblique du flux d'air en aval de cette soufflante, pour lui faire globalement face.

Un effet de limitation d'impact acoustique sur les IGV a notamment alors été constaté.

Les dents seront de fait, dans ce cas, individuellement non symétriques par rapport à une perpendiculaire à la ligne du bord d'attaque et/ou de fuite profilé passant par la dent considérée.

Une autre manière de présenter les choses sera de considérer que, depuis un premier endroit (par exemple depuis une première extrémité, ou depuis une zone définie sur un périmètre) vers un second endroit (telle une seconde extrémité, opposée à la première ou une autre zone le long du périmètre), les dents du profil en serrations seront individuellement inclinées (latéralement) vers le second endroit.

A priori l'inclinaison sera la même pour toutes les dents. Toutefois, les dents pourront être à inclinaisons hétérogènes, différentes suivant les endroits.

Si on se situe plutôt le long de l'allongement au bord d'attaque et/ou de fuite d'une dite structure de type aube (de rotor ou stator), pale (d'une hélice par exemple) ou aile (d'avion par exemple), la structure profilée :

- qui aura une envergure le long de la ligne de bord d'attaque et/ou de fuite, entre une première extrémité et une seconde extrémité,
- présentera alors desdites inclinaisons de dents orientées chacune vers l'une des extrémités.

L'invention sera si nécessaire mieux comprise et d'autres détails, caractéristiques et avantages de l'invention pourront apparaître à la lecture de la description qui suit, faite à titre d'exemple non limitatif en référence aux dessins annexés.

BREVE DESCRIPTION DES FIGURES

- la figure 1 est un schéma en coupe longitudinale (axe X) d'une turbomachine conventionnelle d'aéronef ;
- la figure 2 schématise la zone amont (bec) de la paroi de séparation entre les flux primaire et secondaire, avec une solution conforme à l'invention ;
- la figure 3 peut être soit le détail III de la figure 2, doit un schéma local de profil en serrations présent sur ce qui peut être une pale d'hélicoptère, une aube de la soufflante, du rotor ou du redresseur, un bec de bord d'attaque ou un volet d'aile d'aéronef ;
- la figure 4 est le détail IV de la figure 1 ;
- les figures 5-8 schématisent diverses formes de profils à serrations conformes à l'invention ;
- la figure 9 schématise un aéronef porteur de structures conformes à l'invention ;
- la figure 10 est un agrandissement de la solution de la figure 6 ;
- la figure 11 montre la coupe XI-XI ;
- les figures 12-13 schématisent, selon une même coupe que celle de la figure 11, des manières de réaliser une région poreuse sur un profil à serrations conformes à l'invention, et des lignes d'écoulement d'air ;

- les figures 14-17 schématisent des profils à serrations conformes à l'invention, et des lignes d'écoulement d'air (figures 15-16).

DESCRIPTION DETAILLEE

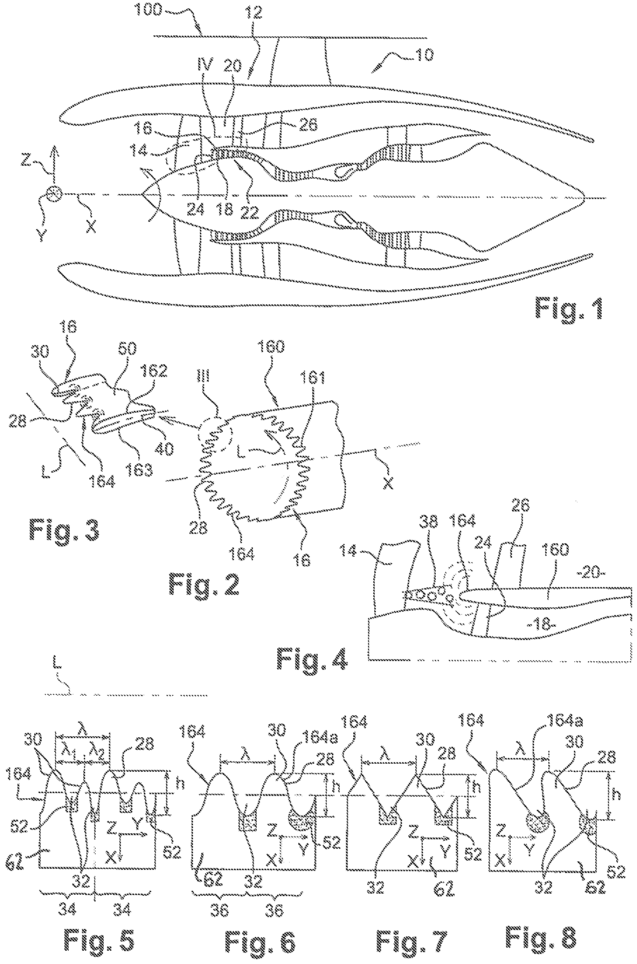

Si l'on se reporte à la figure 1, un turboréacteur 10 d'aéronef 100 est représenté de façon très schématique et est défini comme suit :
La nacelle 12 sert d'enveloppe extérieure aux différents organes, parmi lesquels, à l'avant (à gauche sur la figure 1) une soufflante 14 amont (AM).

En aval (AV) de la soufflante 14, le flux d'air (localement schématisé 38 figure 4) est séparé par le bec séparateur 16 d'une paroi annulaire 160 en un flux d'air primaire et un flux d'air secondaire. Le flux d'air primaire parcourt un passage d'air annulaire interne ou veine primaire 18 en pénétrant dans le compresseur basse pression 22 au niveau des aubes directrices d'entrée 24 IGV, dites aussi premières aubes. Le flux d'air secondaire est dévié par le bec séparateur 16 dans un passage d'air annulaire externe 20 (veine secondaire) en direction des aubes directrices de sortie 26 OGV, dites aussi secondes aubes, puis vers la sortie du moteur.

Sur la figure 2, on visualise de façon plus précise la partie avant 161 du bec séparateur 16 comprenant le bord d'attaque 164 situé le plus en amont et au niveau duquel la paroi externe 162 du bec séparateur 16 rejoint la paroi interne 163 du bec séparateur 16, la paroi supérieure 162 formant la virole intérieure de la veine secondaire 20.

A toutes fins, il est précisé que, dans le présent texte, est axial ce qui s'étend suivant ou parallèlement à l'axe longitudinal (X) de rotation de la partie concernée de la turbomachine, lequel axe sera a priori l'axe général de rotation de cette turbomachine. Est radial (axe Z) et est circonférentel ce qui s'étend radialement à l'axe X et autour de lui, respectivement. Est interne ou intérieur et externe ou extérieur ce qui l'est radialement, vis-à-vis de l'axe X. Ainsi, la paroi interne 163 est la paroi radialement interne du bec séparateur 16. Par ailleurs, les références amont et aval sont à considérer en liaison avec l'écoulement des gaz dans la (partie de) turbomachine considérée : ces gaz entrent à l'amont et sortent à l'aval, en circulant globalement parallèlement à l'axe longitudinal de rotation précité.

En outre, les dessins joints, et les descriptions qui s'y rapportent, ont été définis en référence au repère orthogonal conventionnel X-Y-Z, avec donc l'axe X comme ci-dessus défini.

Le bec séparateur 16 est creux, la face extérieure de la paroi 162 servant de limite radialement interne au passage d'air annulaire externe 20 recevant le flux secondaire tandis que la face intérieure de la paroi 163 sert de limite radialement externe au passage d'air annulaire interne 18 recevant le flux primaire.

La paroi inférieure 163 du bec séparateur 16 forme la virole extérieure du compresseur basse pression 22.

Même si le décalage axial (X) vers l'aval des aubes IGV 24 par rapport au bord d'attaque 164 du bec séparateur 16 est moindre par comparaison avec celui des aubes OGV 26 par rapport à ce même bord d'attaque 164, la portion de la partie avant 161 directement adjacente au bord d'attaque 164 du bec séparateur 16 est dégagée.

Pour l'effet induit de gestion aéro-acoustique par limitation du bruit généré par cette zone, on peut donc prévoir que ce bord d'attaque 164 présente un profil 28 à serrations présentant une succession de dents 30 et de creux 32, comme illustré dans les exemples des figures 5-11.

Mais des structures autres que sur une turbomachine, telle le turboréacteur 10, peuvent être concernées par la solution de l'invention et donc présenter un bord d'attaque 164 à profil 28 à serrations présentant une succession de dents 30 et de creux 32.

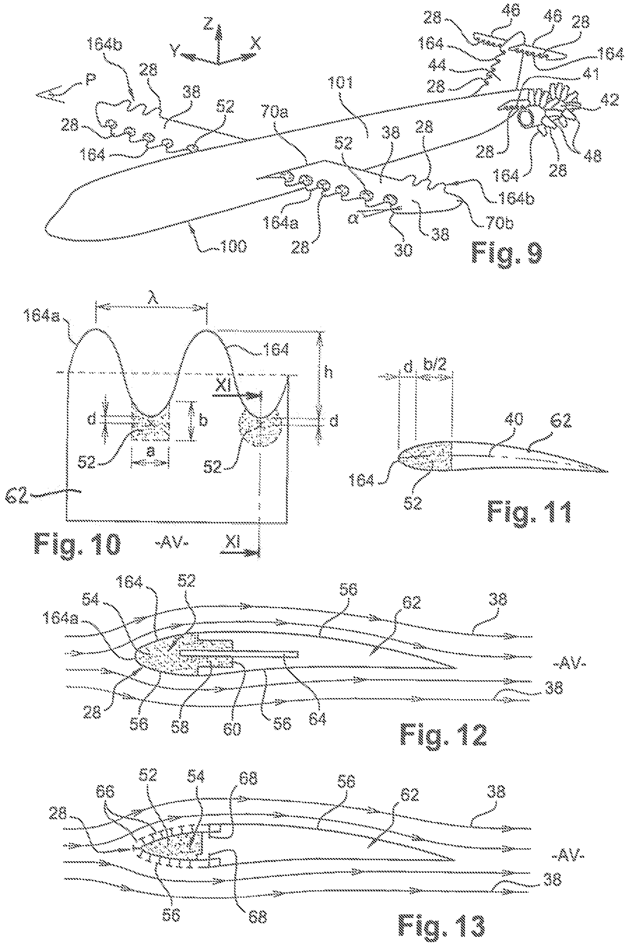

La figure 9 schématise un aéronef 100 sur lequel des structures profilées à tel profil 28 à serrations sont présentes, en bord d'attaque, sur les ailes 38, sur un pylône 41 de support d'un moteur 42 de l'aéronef, sur une dérive 44, un stabilisateur 46, une hélice ou aube 48 d'open-rotor.

Par ailleurs, la figure 3 schématise localement un profil 28 en serrations présent sur ce qui peut être, repéré 50, une pale d'hélicoptère, une aube de la soufflante, du rotor ou du redresseur, un bec de bord d'attaque ou un volet d'aile d'aéronef.

Tous ces profils aérodynamiques ont pour point commun de générer une couche limite sur la surface en aval, et donc un écoulement turbulent.

Quelle que soit l'application, concernant le profil 28 à serrations, on va ici considérer qu'il présente des ondulations qui définissent :

- suivant une direction (L) d'allongement du bord d'attaque 164, une géométrie élémentaire qui se répète, deux ondulations identiques (ou quasi-identiques, quand deux dents consécutives présentent de petites variations de géométries, à +/- 25%) de deux géométries élémentaires successives, telles que 34, 36 figures 5-6, suivant ladite direction L présentant entre elles, suivant cette direction, une distance, $\lambda$ (en m), et

- une amplitude maximale, h (en m), perpendiculairement à cette direction L.

L'amplitude maximale h est définie comme la distance maximale, suivant une perpendiculairement à cette direction L, entre le sommet - le plus proéminent s'il en existe - des dents 30 et le fond des creux 32 - le plus profond s'il en existe -, comme on le voit figure 5 dans l'hypothèse d'une géométrie élémentaire à plusieurs ondulations, deux de préférence - deux dents 30 différentes et deux creux 32 différents -.

Il est aussi précisé que :

- la direction L est la direction le long de laquelle s'étend la ligne 164a de bord d'attaque que l'on peut confondre avec le bord d'attaque 164 si on le considère sur toute sa longueur. Cette direction L peut être rectiligne (cas par exemple d'une aile, d'une dérive, d'un stabilisateur), ou courbe, voire fermée sur elle-même (cas possible par exemple d'une hélice, d'une aube de soufflante, de rotor ou de redresseur, ou du bec séparateur 16),
- la direction de l'amplitude maximale, h, peut être typiquement parallèle à l'axe général X (figure 2, figure 9 pour partie) ; mais peut être aussi orientée suivant une autre direction, par exemple dans le cas d'une pale d'hélicoptère (direction alors a priori perpendiculaire à l'axe Z).

Conformément à l'invention, pour atténuer les fluctuations de pression localement intense, on va donc prévoir sur la structure profilée concernée - au moins - une région poreuse 52 acoustiquement absorbante localisée vers le fond des creux 32.

Ainsi, ces régions poreuses 52 acoustiquement absorbantes forment, de façon localisée, des fonds pour les creux 32 et définissent donc, avec le corps 62 de la structure profilée, la ligne du profil en serrations au bord d'attaque et/ou au bord de fuite de ladite structure profilée. De façon conventionnelle, le corps 62 forme bien sûr la cohérence, la forme essentielle et la rigidité de la structure profilée et la définit donc pour l'essentiel, comme on le voit à titre d'exemple sur les figures.

Il a été constaté que pour favoriser cette atténuation, il pouvait être préférable que le centre (géométrique) de la(chaque) région 52 avec traitement acoustique ou surface poreuse (qu'elle soit rectangulaire, elliptique, ou autre) soit situé à une distance d (en m) en aval (AV) du bord d'attaque profilé 164/ligne 164a, à l'endroit du fond des creux 124 telle que:

$$d = h/10, \text{ à } 30\% \text{ près.}$$

à 30% près.

Afin d'atteindre la plupart de la région avec des fluctuations de pression élevées, il est par ailleurs proposé que la région poreuse 52 acoustiquement absorbante considérée présente :

-- dans la direction de la ligne 164a de bord d'attaque (c'est-à-dire dans la direction de l'envergure ou de l'allongement), deux limites séparées par une distance a (en m) telle que a soit égale à un tiers de ladite distance entre deux sommets consécutifs de dents, à 30% près,

-- dans la direction de la corde 40, deux limites séparées par une distance b (en m) telle que b = h/3, à 30% près.

Les figures 10, 11 schématisent cela. On y constate que la distance d est à prendre parallèlement à « h », perpendiculairement à la direction L (typiquement au plus profond du creux 32), et que d=b/2.

Les longueurs a et b servent à dimensionner les bords des rectangles ou autres formes où la surface est traitée acoustiquement. Dans la zone où a est de l'ordre de un tiers de ladite distance entre deux sommets consécutifs de dents et où les fluctuations de pressions à la paroi ont été constatées comme les plus fortes, l'effet de la porosité via la structure acoustiquement absorbante doit être efficace.

Les marges indiquées de 30% doivent permettre de lever les incertitudes/imprécisions d'ordre technique.

Dans les applications revendiquées, on vise à obtenir une réduction notable de la surface de la structure/pièce considérée, donc des pertes aérodynamiques, par rapport à ce qu'elle aurait été sans la solution de l'invention, avec donc un effet sur la réduction du bruit à large bande. La surface poreuse ou traitement acoustique a pour cible l'endroit où le bruit d'interaction avec la turbulence du sillage est généré. Ainsi, un apport majeur est jugé être celui d'optimiser la surface à traiter afin de réduire les niveaux acoustiques.

En rapport avec l'exemple de la figure 5, où la géométrie élémentaire est à plusieurs ondulations, deux dans l'exemple, la distance λ suivant la direction L est complétée par d'autres distances suivant la même direction L, ici deux, λ1, λ2, relatives aux distances entre deux sommets consécutifs de dents 30 différentes mais successives.

Conformément aux règles préférées précitées, on considérera ici préférable, pour les raisons déjà indiquées, que : a = λ1/3 ou a = λ2/3 (à 30% près), la plus grande distance étant de préférence retenue, donc ici on préférera a = À 1/3 (à 30% près).

D'un point de vue pratique, plusieurs solutions techniques ayant un impact en surface de la structure dans la région 52 traitée acoustiquement peuvent prévues.

On en a privilégié deux permettant de concilier efficacité dans la réduction de la réponse acoustique au niveau des creux 32 et maîtrise technique, y compris en termes de maintenance.

Dans la solution schématisée figure 12, la région 52 poreuse acoustiquement absorbante comprend une mousse poreuse 54, qui peut être métallique, ayant des pores de section (en m) inférieure à ladite distance a/4 ou b/4. Une alternative est que les pores soient inférieurs à 1/10 mm, en section.

La mousse poreuse 54 est présente en surface (extérieure) 56 vers ledit bord d'attaque profilé 164 - où elle pourrait alors définir la forme du profil - et peut occuper une partie notable de l'épaisseur de la structure profilée, voire toute cette épaisseur, comme sur la figure.

Pour maintenir cette masse de mousse, on peut prévoir qu'elle présente vers l'aval (AV) une forme de dent 58 saillante, fixée, par exemple collée, dans un creux 60 frontal du corps 62 de la structure, qui pourrait par exemple être le pylône 41.

Une ou plusieurs barres 64 pourraient en outre ancrer dans le corps 62 la masse de mousse avec sa dent 58.

Dans la solution schématisée figure 13, la région 52 poreuse acoustiquement absorbante comprend, en surface 56 de la structure profilée, un matériau 66 à tôle micro-perforée ou à cavités résonantes recouvrant une mousse poreuse 54 ayant des pores de section (en m) inférieure à a/4 ou b/4. Une alternative est encore que les pores soient inférieurs à 1/10 mm, en section.

Un résonateur de Helmholtz pourra être ainsi formé à l'endroit de cette région 52 poreuse acoustiquement absorbante.

Avec tant le matériau 66 que la mousse 54 en surface, un état de surface 56 compatible avec de faibles pertes aérodynamiques pourra être obtenu.

Des vis 68 pourraient sécuriser la fixation du matériau 66 dans le corps 62 de la structure.

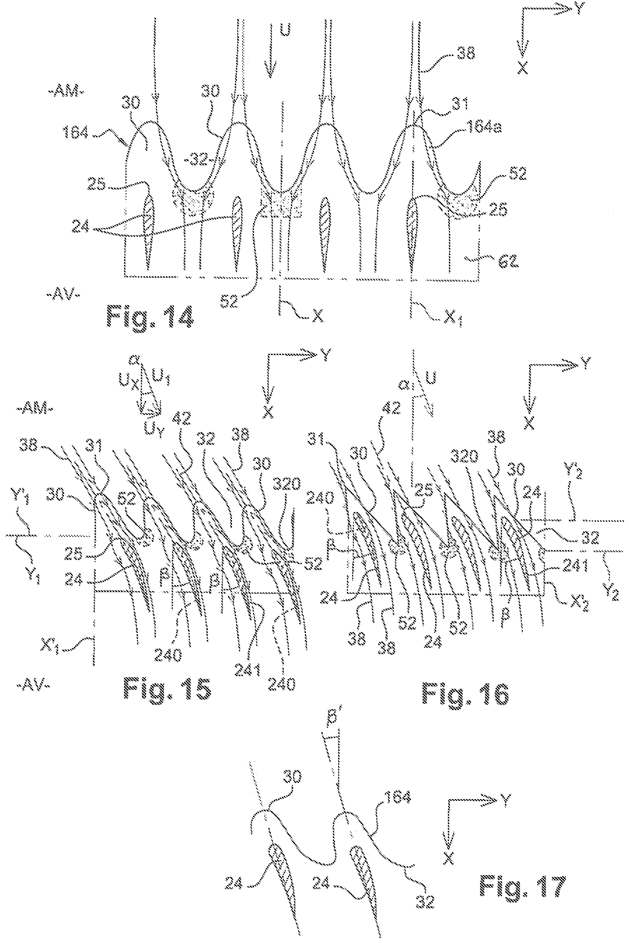

En liaison avec les figures 14-16, on va maintenant revenir au cas particulier d'application à des IGV 24 de la solution de l'invention, avec ses régions 52 poreuses acoustiquement absorbantes.

Pour bénéficier d'une aérodynamique favorable, notamment à l'entrée d'air du compresseur basse pression 22, il est ici proposé qu'autour de l'axe X, certains au moins des creux 32 du profil 28 à serrations soient décalés angulairement (circonférentiellement) par rapport à la position angulaire des aubes IGV 24, de telle sorte que ces creux 32 soient interposés entre deux premières aubes IGV 24 circonférentiellement successives, comme illustré.

Sur ces figures, les IGV 24 sont même placés axialement (X) dans la continuité des dents 30 ; plus précisément chaque IGV 24 a été placé sensiblement dans l'alignement, suivant l'axe X, du sommet de la dent 30 qui le précède vers l'amont (AM).

Figure 14, cet alignement est parallèle à l'axe général X. Et les dents 30, qui présentent chacune un sommet 31, y sont individuellement symétriques par rapport à une parallèle à l'axe X, cette parallèle passant par le sommet 31 de la dent 30 considérée (voir la parallèle X1 par exemple).

Figures 15-16, les IGV 24 sont inclinés dans le plan X-Y par rapport à l'axe X ; angle β. Les dents 30 sont, circonférentiellement autour de cet axe X, inclinées chacune du même angle β (mais cet angle pourrait varier), dans la même direction que celle, commune, des IGV 24. On a en effet, ici, tenu compte de l'influence de la rotation de la soufflante 14, laquelle est supposée tourner dans le sens positif de l'axe Y (voir figure 1 et pointe de flèche suivant la direction L̲ figure 2).

Figure 9, l'angle d'inclinaison du profil 28 en serrations est marqué α pour indiquer qu'en particulier hors disposition en aval d'une soufflante, l'angle β ne sera pas nécessairement respecté, mais que cet angle d'inclinaison α tient ici compte de la direction du flux d'air qui arrive sur le profil 28.

Un angle α, β, voire β' (cf. figure 17, voir ci-après) compris entre 30 et 60°, de préférence entre 35 et 45°, serait approprié, eu égard aux premiers résultats de tests menés. Ceci n'est pas limitatif.

Ainsi, tant les (bords d'attaque des) IGV 24 que les (bords d'attaque des) dents 30 font de fait globalement face au flux d'air 38 dont l'orientation globale oblique U̲ est le résultat de ses composantes Ux suivant X et Uy suivant Y, compte tenu du sens ici convenu de rotation de la soufflante 14.

Les dents 30 sont individuellement non symétriques axialement par apport à une parallèle (voir X'1 et X'2 figures 10-11) audit axe général X, cette parallèle passant là encore par le sommet 31 de la dent considérée.

Le but de ces positionnements peut être considéré comme double. Premièrement, il s'agit d'éviter l'interaction entre l'écoulement accéléré et turbulent produit dans les creux 32 et le bord d'attaque 25 des IGV (figures 14-16). Ceci peut en effet contribuer de manière significative au bruit à large bande du compresseur basse pression 22. Deuxièmement, cette solution technique pourra servir à optimiser l'entrée d'air de compresseur basse pression 22 et de réduire les pertes aérodynamiques éventuelles.

Comme montré figures 15-16, lesdites premières aubes/IGV 24 pourront présenter individuellement une ligne 240 de cambrure moyenne le long de leur corde, pour tenir compte de l'influence de la rotation de la soufflante 14.

L'angle d'inclinaison de l'écoulement produit par la soufflante 14 dépend du régime moteur, donc de la vitesse de rotation de la soufflante. Aussi, envisage-t-on d'orienter les dents 30 dans la direction de la cambrure moyenne des IGV ou de la cambrure au niveau du bord d'attaque 164. Les valeurs d'angles retenues pourront être moyennées le long de l'envergure ou allongement des IGV ou prendre les valeurs de la cambrure des IGV en tête d'aube.

Comme illustré et dans cet exemple, l'extrados 241 est dirigé vers la direction positive Y, l'intrados du côté opposé.

Pour encore limiter l'impact acoustique sur les IGV 24 du flux d'air tourbillonnant que la soufflante 14 génère donc en aval, il est aussi proposé, comme montré figures 15-16, que les dents 30 soient, circonférentiellement autour dudit axe général X, orientées globalement dans la direction d'une tangente 42 à ladite ligne 240 de cambrure moyenne des aubes IGV 24, au niveau de leurs bords d'attaque 25. La tangente forme un angle (β) non nul par rapport à la direction de l'axe général (X) de la turbomachine.

Un avantage est alors d'aligner les dents 30 dans la direction de la cambrure des IGV et de nouveau de pouvoir adapter la géométrie de l'entrée d'air du compresseur 22 à son environnement. La direction de l'écoulement d'air à l'aval de la soufflante 12 dépendant de sa vitesse de rotation, aligner les dents dans la direction des IGV (qui sont une partie fixe), pourrait donc être un bon compromis entre vitesses variables et géométries à figer.

A noter toutefois que la direction de l'écoulement en amont des aubes IGV (ou des dents du bec séparateur 16 d'ailleurs) ne sera pas forcément alignée avec la cambrure des IGV.

Systématiquement, le long de l'axe général X, dans les réalisations préférées illustrées, les dents 30 sont situées en amont par rapport aux bords d'attaque 2 des aubes IGV 24, comme on le constate sur les figures.

Toutefois, pour une limitation dimensionnelle pouvant exister entre le bord d'attaque du bec et les aubes IGV (typiquement de l'ordre de 1-5 cm), ainsi que pour avoir la possibilité d'augmenter la taille/l'amplitude des dents 30, il est proposé que, toujours dans cette direction de l'axe X, les fonds 320 des creux 32 du profil 28 à serrations appartiennent au moins pour certains à une première surface, transversale audit axe X, repérée Y1 figure 15 et Y2 figure 16, positionnée au niveau (figure 15) ou plus en aval (AV ; figure 16) qu'une seconde surface également transversale à l'axe X, repérée Y'1 figure 15 et Y'2 figure 16, à laquelle appartiennent au moins certains des bords d'attaque 25 des aubes IGV 24. Malgré les illustrations, ceci est a priori indépendant de la forme des sommets des dents 30 et des fonds 320 des creux 32.

A ce sujet, les dents 30 et creux 32 du profil 28 à serrations présenteront individuellement une forme ondulée, avec des sommets arrondis (figure 15) ou pointus (figure 16), ceci pour favoriser une réduction de bruit efficace en minimisant les contraintes mécaniques supportées par cette géométrie.

Quant à la forme des parois latérales, repérée 300 figure 16 de ces dents 30 et creux 32, elles pourront se présenter individuellement et localement comme rectilignes (figure 16), ceci pour favoriser la décorrélation des sources de bruit le long du bord d'attaque et pour faciliter la fabrication de cette géométrie.

On va maintenant revenir sur l'inclinaison de la structure profilée, dans le cas d'une structure présentant, dans la direction de sa ligne de bord d'attaque 164a, des extrémités opposées 70a,70b, et donc en quelque sorte une envergure (comme la longueur de l'aile ou celle du pylône 41), même si l'une (au moins) de ces extrémités est une emplanture, comme sur une aile, voir l'exemple figure 9 où la structure considérée est -sensiblement- linéaire suivant l'axe Y.

Dans de tels cas (voilures, aubes, hélices, pylône, dérives...) on notera que les inclinaisons des dents 30 seront favorablement orientées chacune et toutes vers l'une de ces extrémités (dite seconde extrémité), qu'il s'agisse, par exemple pour une aile, de l'emplanture 70a ou de l'extrémité libre 70b.

Dans le cas de structures profilées « à envergure », l'angle α sera situé dans le plan général de la structure, telle plan P qui contient les axes X-Y pour les ailes 38 figure 9.

Il est aussi possible que les inclinaisons des dents 30 varient le long de l'envergure / allongement (direction L).

A noter encore que les commentaires ci-avant en relation avec les figures n'ont fait référence qu'à des situations en bord d'attaque. Or, des bords de fuite pourraient être concernés, en alternative ou complément, tel des (lignes de) bords de fuite 164b à profil 28 en serrations d'aile, comme montré figure 9, d'autres structures de turbomachine ou d'aéronef pourvues de bord de fuite pouvant aussi être concernées par l'invention. En tant que bord de fuite sur une paroi annulaire, on peut citer une tuyère, en sortie des jets primaire et secondaire.

Au bord de fuite, la source de bruit peut typiquement être liée à l'interaction entre la turbulence dans la couche limite du profil et ce bord de fuite.

Figure 17, on a par ailleurs schématisé une situation dans laquelle, la turbomachine étant toujours à soufflante amont (14 ci-avant) et présente un axe général (X) autour duquel peut tourner cette soufflante amont, les dents 30 sont, circonférentiellement autour de l'axe général (X), individuellement inclinées (angle β') dans la direction de la cambrure moyenne des premières aubes IGV 24.

On pourra aussi remarquer que, figure 15, les dents 30 sont en outre, circonférentiellement autour de l'axe X, individuellement inclinées dans la direction de la cambrure des aubes IGV, au niveau de leurs bords d'attaque 25. Cet angle, marqué β, des dents 30 sera identique ou non à l'angle α du vecteur vitesse U1 qui marque la direction générale de l'écoulement en aval de la soufflante.

Sur les figures jointes, on aura compris que celles où un vecteur vitesse (U,U1...) est montré en amont du bord d'attaque illustrent des cas où les dents sont orientées vers la direction de l'écoulement.

**Revendications**

1.  Structure profilée d'écoulement d'air :

    - comprenant un corps (62) et des régions (52) poreuses acoustiquement absorbantes,
    - présentant un amont, un aval, un bord d'attaque (164) à l'amont et/ou un bord de fuite profilé à l'aval, et
    - ayant, suivant une ligne de bord d'attaque (164a) et/ou une ligne de bord de fuite (164b), un profil (28) en serrations présentant une succession de dents (30) et de creux (32),

    **caractérisée en ce que** les régions (52) poreuses acoustiquement absorbantes forment, de façon localisée, des fonds pour les creux (32) et définissent ainsi, avec le corps (62), la ligne du profil (28) en serrations au bord d'attaque et/ou au bord de fuite.

2. Structure profilée selon la revendication 1 :

   - présentant, entre l'amont et l'aval, une corde (40), et
   - dans laquelle :

      -- dans la direction de la corde, le profil (28) en serrations présente une amplitude maximale, h, et
      -- la région (52) poreuse acoustiquement absorbante présente un centre géométrique situé à une distance d en aval du bord d'attaque ou en amont du bord de fuite profilé (164), à l'endroit du fond des creux (32) telle que :

$$d = h/10,$$

      à 30% près.

3. Structure profilée selon la revendication 1 :

   - présentant, entre l'amont et l'aval, une corde (40), et
   - dans laquelle:

      -- dans la direction de la ligne (164a) de bord d'attaque ou de fuite (164b), le profil (28) en serrations présente une distance ($\lambda,\lambda 1,\lambda 2$) entre deux sommets consécutifs de dents,
      -- dans la direction de la corde (40), le profil en serrations présente une amplitude maximale, h, et
      -- la région (52) poreuse acoustiquement absorbante présente :

         -- dans la direction de la ligne de bord d'attaque et/ou de fuite, deux limites séparées par une distance a telle que a égale à un tiers de ladite distance entre deux sommets consécutifs de dents, à 30% près,
         -- dans la direction de la corde, deux limites séparées par une distance b telle que b = h/3, à 30% près.

4. Structure profilée selon la revendication 2, dans laquelle:

   - dans la direction de la ligne (164a) de bord d'attaque et/ou de fuite (164b), le profil (28) en serrations présente une distance ($\lambda,\lambda 1,\lambda 2$) entre deux sommets consécutifs de dents consécutives, et
   - la région (52) poreuse acoustiquement absorbante présente :

      -- dans la direction de la ligne de bord d'attaque et/ou de fuite, deux limites séparées par une distance a telle que a égale à un tiers de ladite distance entre deux sommets consécutifs de dents, à 30% près,
      -- dans la direction de la corde, deux limites séparées par une distance b telle que b = h/3, à 30% près.

5. Structure profilée selon la revendication 3 ou 4, dans laquelle la région (52) poreuse acoustiquement absorbante comprend une mousse poreuse (54) ayant des pores de section inférieure à ladite distance a/4 ou à ladite distance b/4, en surface dudit bord d'attaque profilé (164) de la structure profilée.

6. Structure profilée selon la revendication 3 ou 4, dans laquelle la région (52) poreuse acoustiquement absorbante comprend, en surface de la structure profilée, un matériau (66) à tôle micro-perforée ou à cavités résonantes recouvrant une mousse poreuse (54) ayant des pores de section inférieure à ladite distance a/4 ou à ladite distance b/4.

7. Structure profilée selon l'une quelconque des revendications précédentes, dans laquelle la région (52) poreuse acoustiquement absorbante comprend un résonateur de Helmholtz.

8. Structure profilée selon l'une quelconque des revendications précédentes, dans laquelle les dents (30) et creux (32) du profil en serrations présentent une forme ondulée, avec respectivement des sommets (31) et des fonds (320), tous arrondis ou plus pointus.

9. Structure profilée selon l'une quelconque des revendications précédentes, dans laquelle les dents (30) et creux (32) du profil en serrations présentent:

   - individuellement une forme à parois latérales (300) localement rectilignes, ou
   - une forme ondulée, avec des sommets (31) et des fonds (320) pointus.

10. Structure profilée selon l'une quelconque des revendications précédentes dans laquelle, le long de la ligne de bord d'attaque (164a) et/ou de fuite (164b), les dents (30) du profil en serrations, qui présentent chacune un sommet (31), sont individuellement non symétriques par rapport à une perpendiculaire à la ligne (164a) de bord d'attaque passant par la dent (30) considérée.

11. Structure profilée selon l'une quelconque des revendications précédentes dans laquelle, le long de la ligne de bord d'attaque (164a) et/ou de fuite (164b), depuis un premier endroit vers un second endroit, les dents (30) du profil en serrations, qui présentent chacune un sommet (31), sont individuellement inclinées vers le second endroit.

12. Structure profilée selon la revendication 11 :

    - qui présente une envergure le long de la ligne de bord d'attaque et/ou de fuite, entre une première extrémité (70a) et une seconde extrémité (70b), et
    - dans laquelle les inclinaisons des dents (30) sont orientées chacune vers l'une desdites extrémités.

13. Structure profilée selon l'une quelconque des revendications précédentes, qui est l'une parmi une structure d'aéronef (100,101,38,41,44,46) et une structure de turbomachine à soufflante amont (14).

14. Structure profilée selon l'une quelconque des revendications 1 à 12, qui est l'une parmi :

    - une aile d'aéronef, un bec ou un volet d'aile d'aéronef, un pylône de support d'un moteur d'aéronef, une dérive, un stabilisateur d'aéronef, une pale d'hélicoptère, une hélice,
    - l'une des parties suivantes de turbomachine adaptée à propulser un aéronef :

        -- un bord d'attaque (164) ou de fuite d'une paroi (160) annulaire de séparation d'un flux d'air, en aval d'une soufflante de la turbomachine, entre un flux primaire et un flux secondaire,
        -- des premières aubes (24,IGV) de guidage du flux primaire (Fp),
        -- des secondes aubes (26,OGV) de guidage du flux secondaire (Fs).

15. Turbomachine (10) pour aéronef, comprenant la structure profilée selon l'une quelconque des revendications 1 à 12.

16. Turbomachine pour aéronef, la turbomachine qui est traversée à un flux d'air circulant d'amont vers l'aval, comprenant la structure profilée selon la revendication 11 et étant telle que :

    - la turbomachine comprend une soufflante amont (14) et présente un axe général (X) autour duquel peut tourner la soufflante amont,
    - la soufflante amont (14) est adaptée à tourner dans un sens prédéterminé autour dudit axe général (X), de sorte que le flux d'air en aval de la soufflante soit globalement orienté obliquement par rapport audit axe général (X), et
    - les dents (30) sont, circonférentiellement autour dudit axe général (X), individuellement inclinées vers l'orientation (α) globalement oblique du flux d'air en aval de la soufflante, pour lui faire globalement face.

17. Turbomachine pour aéronef, comprenant la structure profilée selon la revendication 14, ou les revendications 11 et 14, et dans laquelle :

    - la structure profilée est l'une desdites parties de turbomachine adaptée à propulser un aéronef, la turbomachine comprenant une soufflante amont (14) et présentant un axe général (X) autour duquel peut tourner la soufflante amont, et
    - les dents (30) sont, circonférentiellement autour dudit axe général (X), individuellement inclinées (angle β, β') :

        -- dans la direction d'une cambrure moyenne desdites premières aubes (24,IGV), ou
        -- dans la direction d'une cambrure au niveau du bord d'attaque (25) desdites premières aubes (24,IGV).

**Patentansprüche**

1. Profilierte Luftströmungsstruktur

    - mit einem Körper (62) und schallabsorbierenden porösen Bereichen (52),
    - mit einer Anströmseite, einer Abströmseite, einer Vorderkante (164) auf der Anströmseite und/oder einer profilierten Hinterkante auf der Abströmseite, und
    - mit einem Serrationsprofil (28) mit einer Folge von Zähnen (30) und Vertiefungen (32) entlang einer Vorderkantenlinie (164a) und/oder einer Hinterkantenlinie (164b),

**dadurch gekennzeichnet, dass**
die schallabsorbierenden porösen Bereiche (52) bereichsweise Böden für die Vertiefungen (32) bilden und so zusammen mit dem Körper (62) die Linie des Serrationsprofils (28) an der Vorderkante und/oder der Hinterkante definieren.

2. Profilierte Struktur nach Anspruch 1

    - mit einer Sehne (40) zwischen der Anströmseite und der Abströmseite,
    - wobei

        -- in der Richtung der Sehne das Serrationsprofil (28) eine maximale Höhe h aufweist und

-- der schallabsorbierende poröse Bereich (52) ein geometrisches Zentrum aufweist, das sich in einem Abstand d stromabwärts von der Vorderkante oder stromaufwärts von der profilierten Hinterkante (164) am Boden der Vertiefungen (32) befindet, so dass:

$$d = h/10,$$

auf 30 % genau.

3. Profilierte Struktur nach Anspruch 1

- mit einer Sehne (40) zwischen der Anströmseite und der Abströmseite,
- wobei

-- in Richtung der Vorderkantenlinie (164a) oder Hinterkantenlinie (164b) das Serrationsprofil (28) einen Abstand ($\lambda$, $\lambda$1, $\lambda$2) zwischen zwei aufeinanderfolgenden Zahnspitzen aufweist,
-- in Richtung der Sehne (40) das Serrationsprofil eine maximale Höhe h aufweist und
-- der schallabsorbierende poröse Bereich (52) umfasst:

-- in Richtung der Vorder- und/oder Hinterkantenlinie zwei Grenzen, die durch einen Abstand a getrennt sind, so dass a gleich einem Drittel des Abstandes zwischen zwei aufeinanderfolgenden Zahnspitzen ist, auf 30 % genau,
-- in Richtung der Sehne zwei Grenzen, die durch einen Abstand b getrennt sind, so dass b = h/3, auf 30 % genau.

4. Profilierte Struktur nach Anspruch 2, wobei

- in Richtung der Vorderkantenlinie (164a) und/oder der Hinterkantenlinie (164b) das Serrationsprofil (28) einen Abstand ($\lambda$, $\lambda$1, $\lambda$2) zwischen zwei aufeinanderfolgenden Spitzen aufeinanderfolgender Zähne aufweist, und
- der schallabsorbierende poröse Bereich (52) umfasst:

-- in Richtung der Vorder- und/oder Hinterkantenlinie zwei Grenzen, die durch einen Abstand a getrennt sind, so dass a gleich einem Drittel des Abstands zwischen zwei aufeinanderfolgenden Zahnspitzen ist, auf 30 % genau,
-- in Richtung der Sehne zwei Grenzen, die durch einen Abstand b getrennt sind, so dass b = h/3, auf 30 % genau.

5. Profilierte Struktur nach Anspruch 3 oder 4, wobei der schallabsorbierende poröse Bereich (52) einen porösen Schaumstoff (54) mit Poren mit einem Querschnitt, der kleiner ist als der Abstand a/4 oder der Abstand b/4, an der Oberfläche der profilierten Vorderkante (164) der profilierten Struktur umfasst.

6. Profilierte Struktur nach Anspruch 3 oder 4, wobei der schallabsorbierende poröse Bereich (52) an der Oberfläche der profilierten Struktur ein mikroperforiertes Blech- oder Resonanzhohlraummaterial (66) umfasst, das einen porösen Schaumstoff (54) mit Poren mit einem Querschnitt kleiner als der Abstand a/4 oder der Abstand b/4 bedeckt.

7. Profilierte Struktur nach einem der vorhergehenden Ansprüche, wobei der schallabsorbierende poröse Bereich (52) einen Helmholtz-Resonator umfasst.

8. Profilierte Struktur nach einem der vorhergehenden Ansprüche, wobei die Zähne (30) und Vertiefungen (32) des Serrationsprofils eine Wellenform mit jeweils abgerundeten oder spitzer zulaufenden Spitzen (31) bzw. Böden (320) aufweisen.

9. Profilierte Struktur nach einem der vorhergehenden Ansprüche, wobei die Zähne (30) und Vertiefungen (32) des Serrationsprofils aufweisen:

- jeweils eine Form mit bereichsweise geradlinigen Seitenwänden (300) oder
- eine Wellenform mit spitz zulaufendenden Spitzen (31) und Böden (320).

10. Profilierte Struktur nach einem der vorhergehenden Ansprüche, wobei entlang der Vorderkantenlinie (164a) und/oder der Hinterkantenlinie (164b) die Zähne (30) des Serrationsprofils, die jeweils eine Spitze (31) aufweisen, jeweils unsymmetrisch bezüglich einer durch den betreffenden Zahn (30) verlaufenden Senkrechten zur Vorderkantenlinie (164a) verlaufen.

11. Profilierte Struktur nach einem der vorhergehenden Ansprüche, wobei entlang der Vorderkantenlinie (164a) und/oder der Hinterkantenlinie (164b) von einer ersten Stelle zu einer zweiten Stelle die Zähne (30) des Serrationsprofils, die jeweils eine Spitze (31) aufweisen, jeweils zur zweiten Stelle hin geneigt sind.

**12.** Profilierte Struktur nach Anspruch 11,

- umfassend eine Spannweite entlang der Vorder- und/oder Hinterkantenlinie zwischen einem ersten Ende (70a) und einem zweiten Ende (70b), und
- wobei die Schrägen der Zähne (30) jeweils zu einem der Enden hin ausgerichtet sind.

**13.** Profilierte Struktur nach einem der vorhergehenden Ansprüche,
wobei es sich entweder um eine Luftfahrzeugstruktur (100, 101, 38, 41, 44, 46) oder um eine Turbotriebwerksstruktur mit stromaufwärtigem Gebläse (14) handelt.

**14.** Profilierte Struktur nach einem der Ansprüche 1 bis 12, wobei es sich handelt um:

- einen Luftfahrzeugflügel, einer Schnauze oder einer Klappe eines Luftfahrzeugflügels, einen Trägerpylon eines Luftfahrzeugtriebwerks, ein Seitenleitwerk, einen Stabilisator für Luftfahrzeuge, ein Hubschrauberrotorblatt, einen Propeller,
- eines der folgenden Teile eines Turbotriebwerks zum Antrieb eines Luftfahrzeugs:

-- einer Vorderkante (164) oder Hinterkante einer ringförmigen Wand (160) zur Trennung eines Luftstroms, stromabwärts eines Gebläses des Turbotriebwerks, in einen Primärstrom und einen Sekundärstrom,
-- ersten Schaufeln (24, IGV) zur Führung des Primärstroms (Fp),
-- zweiten Schaufeln (26, OGV) zur Führung des Sekundärstroms (Fs).

**15.** Turbotriebwerk (10) für ein Luftfahrzeug, umfassend die profilierte Struktur nach einem der Ansprüche 1 bis 12.

**16.** Turbotriebwerk für ein Luftfahrzeug, wobei das Turbotriebwerk, das von einem von stromaufwärts nach stromabwärts zirkulierenden Luftstrom durchströmt wird, die profilierte Struktur nach Anspruch 11 umfasst und so ausgeführt ist, dass:

- das Turbotriebwerk ein stromaufwärtiges Gebläse (14) umfasst und eine Achse (X) aufweist, um die sich das stromaufwärtige Gebläse drehen kann,
- das stromaufwärtige Gebläse (14) in einer vorbestimmten Richtung um die Achse (X) drehbar ist, so dass der Luftstrom stromabwärts des Gebläses insgesamt schräg zu der Achse (X) ausgerichtet ist, und
- in Umfangsrichtung um die Achse (X) die Zähne (30) jeweils in Richtung der insgesamt schrägen Ausrichtung ($\alpha$) des Luftstroms stromabwärts des Gebläses geneigt sind, um diesem im Ganzen gegenüberzuliegen.

**17.** Turbotriebwerk für ein Luftfahrzeug, umfassend die profilierte Struktur nach Anspruch 14 oder nach den Ansprüchen 11 und 14, wobei:

- es sich bei der profilierten Struktur um eines der Teile eines Turbotriebwerks zum Antreiben eines Luftfahrzeugs handelt, wobei das Turbotriebwerk ein stromaufwärtiges Gebläse (14) umfasst und eine Achse (X) aufweist, um die sich das stromaufwärtige Gebläse drehen kann, und
- die Zähne (30) in Umfangsrichtung um die Achse (X) jeweils geneigt sind (Winkel $\beta$, $\beta'$), und zwar:

-- in Richtung einer mittleren Wölbung der ersten Schaufeln (24, IGV), oder
-- in Richtung einer Wölbung an der Vorderkante (25) der ersten Schaufeln (24, IGV).

**Claims**

**1.** Profiled air flow structure:

- comprising a body (62) and porous acoustically absorbent regions (52),
- having an upstream, a downstream, an upstream leading edge (164) and/or a downstream profiled trailing edge, and
- having, along a leading edge line (164a) and/or a trailing edge line (164b), a serrated profile line (28) showing a succession of teeth (30) and depressions (32),

**characterized in that** the porous acoustically absorbent regions (52) locally form bottoms for the depressions (32) and thus define, together with the body (62), the serrated profile line (28) at the leading edge and/or trailing edge.

**2.** Profiled structure according to claim 1:

- having, between upstream and downstream, a chord (40), and
- in which:

-- in the direction of the chord, the serrations profile (28) has a maximum amplitude, h, and
-- the porous acoustically absorbent region (52) has a geometric centre located at a distance d downstream of the profiled leading or trailing edge (164) at the bottom of the depressions (32) such that:

$$d = h/10,$$

within 30%.

3. Profiled structure according to claim 1:

- having, between upstream and downstream, a chord (40), and
- in which:

-- in the direction of the line (164a) of the leading or trailing edge (164b), the serrated profile line (28) has a distance($\lambda$, $\lambda$1, $\lambda$2) between two consecutive tooth tips,
-- in the direction of the chord (40), the serrations profile has a maximum amplitude, h, and
-- the porous acoustically absorbent region (52) has:

-- in the direction of the leading and/or trailing edge line, two limits separated by a distance a such that a is equal to one third of said distance between two consecutive tooth tips, to within 30%,
-- in the direction of the chord, two limits separated by a distance b such that b = h/3, within 30%.

4. Profiled structure according to claim 2, wherein:

-- in the direction of the line (164a) of the leading or trailing edge (164b), the serrated profile line (28) has a distance($\lambda$, $\lambda$1, $\lambda$2) between two consecutive tooth tips, and
- the porous acoustically absorbent region (52) has:

-- in the direction of the leading and/or trailing edge line, two limits separated by a distance a such that a is equal to one third of said distance between two consecutive tooth tips, to within 30%,
-- in the direction of the chord, two limits separated by a distance b such that b = h/3, within 30%.

5. Profiled structure according to claim 3 or 4, wherein the porous acoustically absorbent region (52) comprises a porous foam (54) having pores with a cross-section smaller than said distance a/4 or said distance b/4, on the surface of said profiled leading edge (164) of the profiled structure.

6. Profiled structure according to claim 3 or 4, wherein the porous acoustically absorbent region (52) comprises, on the surface of the profiled structure, a micro-perforated sheet or resonant cavity material (66) covering a porous foam (54) having pores with a cross-section smaller than said distance a/4 or said distance b/4.

7. Profiled structure according to any of the previous claims, wherein the porous acoustically absorbent region (52) comprises a Helmholtz resonator.

8. Profiled structure according to one of the previous claims, in which the teeth (30) and depressions (32) of the serrated profile line have a wavy shape, with respectively tops (31) and bottoms (320), all rounded or sharper.

9. Profiled structure according to any of the previous claims, wherein the teeth (30) and depressions (32) of the serrated profile line have:

- individually a shape with locally rectilinear side walls (300), or
- a wavy shape, with sharp tops (31) and bottoms (320).

10. Profiled structure according to any of the previous claims in which, along the leading (164a) and/or trailing (164b) edge line, the teeth (30) of the serrated profile, which each have a top (31), are individually non-symmetrical with respect to a perpendicular to the leading edge line (164a) passing through the tooth (30) in question.

11. Profiled structure according to any of the previous claims in which, along the leading (164a) and/or trailing (164b) edge line, from a first location to a second location, the teeth (30) of the serrated profile, each having a top (31), are individually inclined towards the second location.

12. Profiled structure according to claim 11:

- which has a span along the leading and/or trailing edge line between a first end (70a) and a second end (70b), and
- wherein the inclinations of the teeth (30) are each oriented towards one of said ends.

13. Profiled structure according to any of the previous claims, which is one of an aircraft structure (100, 101, 38, 41, 44, 46) and an upstream fan turbomachine structure (14).

14. Profiled structure according to any one of claims 1 to 12, which is one of:

- an aircraft wing, an aircraft wing slat or flap, an aircraft engine support pylon, a fin, an aircraft stabilizer, a helicopter blade, a propeller,
- one of the following parts of turbomachinery adapted to power an aircraft:

  -- a leading (164) and/or trailing edge (160) of an annular air flow separating wall, downstream of a fan of the turbomachine, between a primary flow and a secondary flow,
  -- first fixed primary flow (Fp) guide vanes (24, IGV),
  -- second fixed secondary flow (Fs) guide vanes (26, OGV).

15. Turbomachine (10) for aircraft comprising the profiled structure according to any one of claims 1 to 12.

16. Turbomachine for aircraft, said turbomachine being traversed by an air flow flowing from upstream to downstream, comprising the profiled structure according to claim 11 and being such that:

    - the turbomachine comprises an upstream fan (14) and has a general axis (X) about which the upstream fan can rotate,
    - the front fan (14) is adapted to rotate in a predetermined direction (Y) about said general axis (X) such that the airflow downstream of the fan is generally obliquely oriented with respect to said general axis (X), and
    - the teeth (30) can then be inclined circumferentially around said general axis (X) towards the generally oblique orientation ($\alpha$) of the air flow downstream of the fan, to face it generally.

17. Turbomachine for aircraft, comprising the profiled structure according to claim 14, or claims 11 and 14, and wherein:

    - the turbomachine comprises an upstream fan (14) and has a general axis (X) about which the upstream fan can rotate, and
    - the teeth (30) are, circumferentially around said general axis (X), individually inclined (angle $\beta$, $\beta'$):

      -- in the direction of an average camber of said first vanes (24, IGV), or
      -- in the direction of a camber at the leading edge (25) of said first blades (24, IGV).

Fig. 1

Fig. 3

Fig. 2

Fig. 4

Fig. 5

Fig. 6

Fig. 7

Fig. 8

Fig. 9

Fig. 10

Fig. 11

Fig. 12

Fig. 13

**Fig. 14**

**Fig. 15**

**Fig. 16**

**Fig. 17**

**EP 3 752 729 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016184619 A